# EUROPEAN PATENT APPLICATION

(11) **EP 4 822 888 A1**
(43) Date of publication of application: **14.10.2026**
(21) Application number: 26159543.3
(22) Date of filing: 19.02.2026
(51) Int. Cl.: H01M 50/609, H01M 50/618

(54) **ELECTROLYTE INJECTION APPARATUS FOR SECONDARY BATTERIES**

(30) Priority: 09.04.2025 KR 20250045995
(71) Applicant: SAMSUNG SDI CO., LTD., Yongin-si, Gyeonggi-do 17084 (KR)
(72) Inventor: Kim, Yongrae, Yongin-si, Gyeonggi-do 17084 (KR)
(74) Representative: Meissner Bolte Partnerschaft mbB

(57) **Abstract**

An electrolyte injection apparatus for secondary batteries, the electrolyte injection apparatus being configured to inject electrolyte into an electrolyte injection port (64) on at least one surface of a battery cell (1), the electrolyte injection apparatus including a dispensing unit (100) including a dispensing nozzle (101) configured to inject the electrolyte into the electrolyte injection port (64), a suction unit (200) positioned in a peripheral portion of the dispensing nozzle (101), the suction unit (200) being configured to provide a predetermined suction force, and a suction force generating unit (300) connected to the suction unit (200), the suction force generating unit (300) being configured to generate the suction force.

## Description

### CROSS-REFERENCE TO RELATED APPLICATION

The present application claims priority to and the benefit of Korean Patent Application No. 10-2025-0045995, filed on April 9, 2025, in the Korean Intellectual Property Office, the entire invention of which is incorporated herein by reference.

### BACKGROUND

### 1. Field

The present invention relates to an electrolyte injection apparatus for secondary batteries.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly including a positive electrode and a negative electrode, a case that accommodates the electrode assembly, a terminal part connected to the electrode assembly, etc.

Such secondary batteries are manufactured by accommodating an electrode assembly in a case, injecting an electrolyte into the case, and then sealing the case (e.g., through thermal fusion). The electrolyte injected into the case functions to provide a migration path for ions, thereby enabling a battery reaction to be smoothly performed, and is a critical factor in determining the lifespan and performance of the battery. For example, methods for injecting the electrolyte into secondary batteries include an atmospheric pressure injection method, a centrifugal injection method, and a vacuum injection method.

The above information disclosed in this Background section is for enhancement of understanding of the background of the present invention, and therefore, it may contain information that does not constitute related (or prior) art.

### SUMMARY

The present invention includes an electrolyte injection apparatus for secondary batteries, the electrolyte injection apparatus being configured to inject electrolyte into an electrolyte injection port on at least one surface of a battery cell, the electrolyte injection apparatus including a dispensing unit including a dispensing nozzle configured to inject the electrolyte into the electrolyte injection port, a suction unit positioned in a peripheral portion of the dispensing nozzle, the suction unit being configured to provide a predetermined suction force, and a suction force generating unit connected to the suction unit, the suction force generating unit being configured to generate the suction force.

The suction unit may include a suction housing including a suction hole open toward the dispensing nozzle.

The suction housing may be detachably secured to the dispensing nozzle.

The suction housing may have a preset partition shape, the suction housing being around the electrolyte injection port during injection of the electrolyte, and the suction hole may be open toward the electrolyte injection port during the injection of the electrolyte.

The suction housing may be seated on the at least one surface of the battery cell on which is the electrolyte injection port, during the injection of the electrolyte.

The suction housing may include a plurality of suction housings, the plurality of suction housings are radially spaced apart from each other with respect to an imaginary central point, and the suction hole is open toward the imaginary central point.

The plurality of suction housings may be radial with respect to the dispensing nozzle, during the injection of the electrolyte.

At least one of the plurality of suction housings may provide a suction force different from a suction force provided by another one of the plurality of suction housings.

The suction housing may have a hollow tubular shape with open opposite ends, and the suction hole may be in an inner circumferential surface of the suction housing.

The suction housing may enclose the dispensing nozzle, with the dispensing nozzle inserted into the suction housing, during the injection of the electrolyte.

The suction force generating unit may include a vacuum pump.

The suction force generating unit may include a vacuum generating unit, and the vacuum generating unit may be connected to the battery cell and configured to depressurize an interior of the battery cell, or may be connected to the suction unit to provide a suction force.

The electrolyte injection apparatus may further include a first switching component configured to selectively open or close a first line connecting the vacuum generating unit and the battery cell and a second line connecting the dispensing unit and the battery cell, wherein the first switching component is switched to a first state in which the vacuum generating unit is in communication with the battery cell to depressurize the interior of the battery cell, or to a second state in which the dispensing unit is in communication with the battery cell to inject the electrolyte into the battery cell.

The electrolyte injection apparatus may further include a second switching component configured to selectively open or close a third line connecting the vacuum generating unit and the suction unit, wherein the suction unit selectively provides a suction force in response to a switching operation of the second switching component.

A switching operation of the first switching component to the second state can be interlocked with a switching operation of the second switching component configured to provide a suction force to the suction unit.

The second switching component may maintain an on-state in which the suction force is provided to the suction unit for a preset period of time, after the first switching component is switched to an off-state.

The electrolyte injection apparatus may further include an electrolyte supply component configured to supply the electrolyte to the dispensing unit, and a discharge line connecting the electrolyte supply component and the suction unit, the discharge line being configured to recover the electrolyte suctioned through the suction unit to the electrolyte supply component.

The electrolyte injection apparatus may further include a pump on the discharge line, the pump being configured to control a flow of the electrolyte.

The electrolyte injection apparatus may further include an auxiliary switching component configured to selectively open or close the discharge line.

The electrolyte injection apparatus may further include a suction switching component configured to selectively open or close a line connecting the suction force generating unit and the suction unit, wherein the auxiliary switching component may be switched to an on-state in conjunction with switching of the suction switching component to an off-state.

### BRIEF DESCRIPTION OF THE DRAWINGS

Features will become apparent to those of ordinary skill in the art by describing in detail exemplary embodiments with reference to the attached drawings, in which:
FIG. 1 is a top perspective view illustrating an external shape of a secondary battery;
FIG. 2 is a sectional view taken along line I-I' of FIG. 1, and is a view illustrating an internal structure of the secondary battery according to embodiments of the present invention;
FIG. 3 is a view illustrating an electrolyte injection apparatus for secondary batteries according to embodiments of the present invention;
FIG. 4 is a diagram illustrating examples of shapes of a suction unit according to embodiments of the present invention;
FIGS. 5 and 6 are schematic diagrams illustrating an electrolyte injection apparatus according to embodiments of the present invention; and
FIG. 7 is a schematic diagram illustrating an electrolyte injection apparatus according to embodiments of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Exemplary embodiments of the present invention will be described below in detail with reference to the accompanying drawings. Prior to the description, it is noted that the terms or words used in this specification and claims should not be construed as being limited to common or dictionary meanings but instead should be understood to have meanings and concepts in agreement with the spirit of the present invention based on the principle that an inventor can define the concept of each term suitably in order to describe his/her own invention in the best way possible. Accordingly, since the embodiments described in this specification and the configurations illustrated in the drawings are only an example of the present invention and they do not cover all the technical ideas of the present invention, it should be understood that various changes and modifications may be made at the time of filing this application.

It will be further understood that the terms "comprises," "includes," "comprising" and/or "including" when used herein, specify the presence of stated features, integers, steps, operations, elements, components, and/or groups thereof, but do not preclude the presence or addition of one or more other features, integers, steps, operations, elements, components, and/or groups thereof.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present invention relates to "one or more embodiments of the present invention". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present invention and is not intended to limit the present invention.

The present invention will be described in detail with reference to the attached drawings.

Examples of secondary batteries include a coin type, a cylindrical type, a prismatic type, and a pouch type. The present invention is basically applicable to a prismatic secondary battery. Therefore, the prismatic secondary battery will first be briefly described prior to description of embodiments of the present invention.

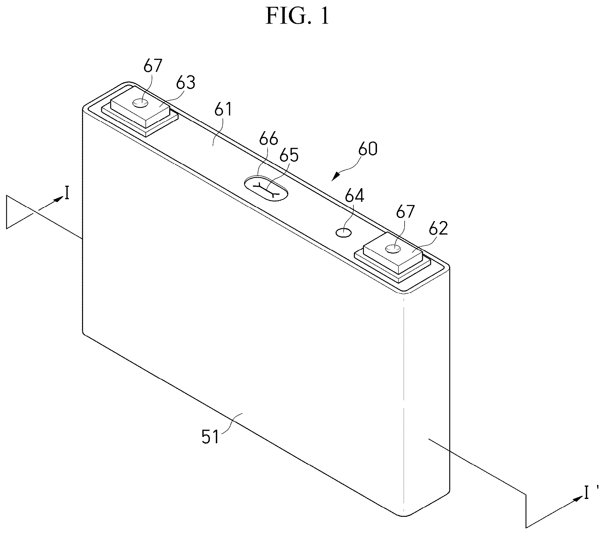

FIG. 1 is a top perspective view illustrating an external shape of a secondary battery.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 62 and a second terminal 63 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

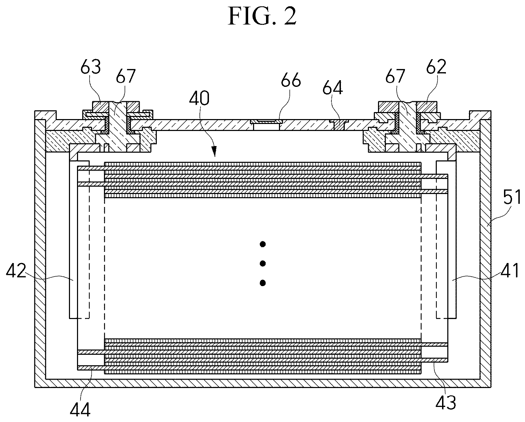

FIG. 2 is a sectional view taken along line I-I' of FIG. 1, and is a view illustrating an internal structure of the secondary battery according to embodiments. As illustrated, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 may be a Z-stack electrode assembly in which a first electrode plate and a second electrode plate are inserted into both sides of a separator bent into a Z-stack. Furthermore, the electrode assembly 40 may include of one or more electrode assemblies, which are stacked such that their long sides are adjacent to each other and accommodated in the casing, and the number of electrode assemblies in the present invention may vary. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40 (in the orientation of FIG. 2), and the second electrode tab 44 may be located on the left end side of the electrode assembly 40. In other embodiments, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the terminal pins 67 may also be coupled to the first terminal 62 and the second terminal 63 by riveting or welding.

Hereinafter, materials which may be used in a secondary battery according to an embodiment of the present invention are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel oxide, lithium cobalt oxide, lithium manganese oxide, a lithium ferrous phosphate compound, cobalt-free nickel-manganese oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-8-c}Mn₈X_{c}O_{2-α}Dₐ (0.90≤a≤1.8, 0≤b≤0.5, 0≤c≤0.5, 0<α<2); LiₐNi_{b}Co_{c}L¹₄GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present invention may vary.

A negative electrode active material may include a material capable of reversibly intercalation/de-intercalation with respect to lithium ions, lithium metal, an alloy of lithium metal, a material capable of doping and dedoping with respect to lithium, or transition metal oxide.

The material capable of reversibly intercalation/de-intercalation with respect to lithium ions may include a carbon negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

A Si negative electrode active material or a Sn negative electrode active material may be used as the material capable of doping and dedoping with respect to lithium. The Si negative electrode active material may be silicon, a silicon-carbon composite, SiOₓ (0<x<2), a Si alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous binder, an aqueous binder, a dry binder, or a combination of them may be used as the binder. If the aqueous binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate, ester, ether, ketone, or alcohol solvent, an aprotic solvent, or a combination of them. The carbonate, ester, ether, ketone, or alcohol solvent, or the aprotic solvent may be used solely, or two types or more of them may be mixed and used as the nonaqueous organic solvent.

Furthermore, if the carbonate solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but this may vary.

The organic matter and the inorganic matter may have a form in which the organic matter and the inorganic matter have been mixed in one coating layer or a form in which a coating layer including the organic matter and a coating layer including the inorganic matter have been stacked.

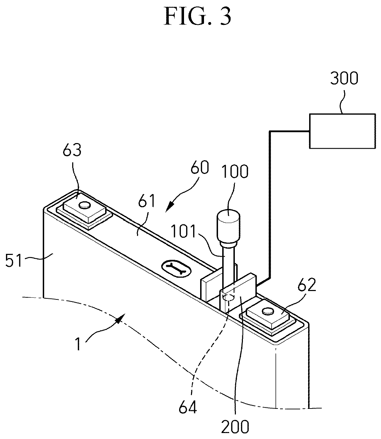

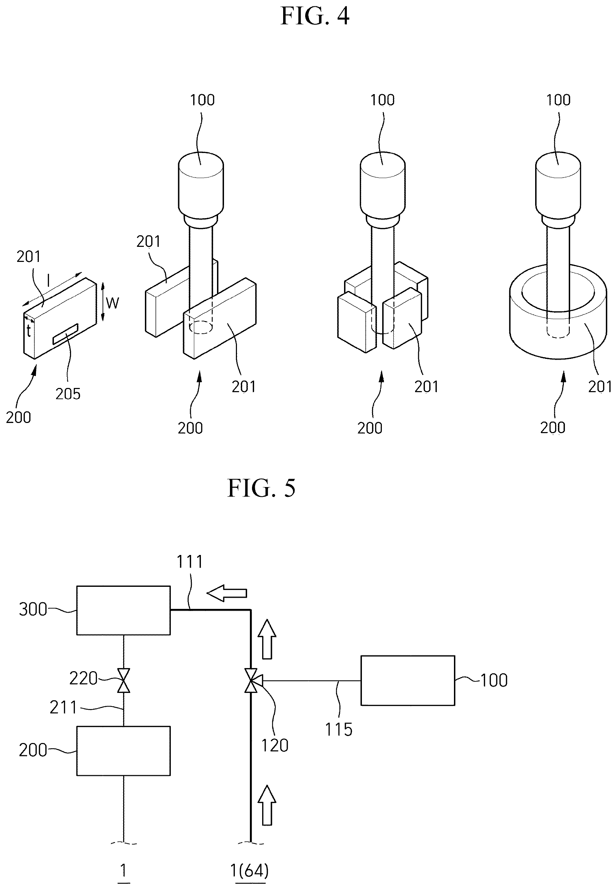

FIG. 3 is a view illustrating an electrolyte injection apparatus for secondary batteries according to embodiments of the present invention. FIG. 4 is a diagram illustrating examples of shapes of a suction unit according to embodiments of the present invention.

Referring to FIGS. 3 and 4, the electrolyte injection apparatus for secondary batteries according to embodiments of the present invention may include a dispensing unit 100, a suction unit 200, and a suction force generating unit 300 (e.g., a vacuum generating unit). The dispensing unit 100 may be a component configured to inject electrolyte into a provided battery cell 1. The electrolyte may be injected into the battery cell 1 through an electrolyte injection port 64 formed on at least one side of the battery cell 1 (e.g., a right side of the battery cell 1). As illustrated, the electrolyte injection port 64 may be formed on a cap plate 61, but may be formed on at least one surface of a casing 51 or may be formed at multiple positions. The suction unit 200 may be located adjacent to the electrolyte injection port 64, and may be configured to suction electrolyte overflowed around the electrolyte injection port 64. An electrolyte injection process using the electrolyte injection apparatus of the present invention may be performed in a chamber which is under vacuum, but this may vary.

The dispensing unit 100 may inject electrolyte through the electrolyte injection port 64 of the battery cell 1 that is in an open state, so that the electrode assembly may be impregnated with the electrolyte. The amount of the electrolyte injected through the dispensing unit 100 may correspond to a design value required for a final secondary battery product. As needed, the electrolyte injection process using the dispensing unit 100 may be performed in multiple divided injections (i.e., in a divided dispensing manner), or an intentional over-dispensing process may be performed. As needed, the electrolyte injection apparatus may further include a vacuum unit configured to reduce pressure inside the battery cell 1.

The dispensing unit 100 may include a dispensing nozzle 101 that is inserted into the electrolyte injection port 64. The dispensing nozzle 101 may include an outlet formed at one end thereof. The outlet may be inserted into the electrolyte injection port 64 of the battery cell 1 and may function as an injection path through which the electrolyte is injected. The dispensing unit 100 may be provided to be movable to a predetermined position along a preset path by a known driving unit, and in response to the movement, an operation in which the dispensing nozzle 101 is inserted into and removed from the electrolyte injection port 64 may be repeatedly performed. The driving unit may be operated according to preset conditions under the control of a controller. Because various known configurations may be employed for the detailed structure of the dispensing unit 100 and the driving unit for driving the dispensing unit 100, a detailed description thereof will be omitted. The dispensing unit 100 may be supplied with a preset amount of electrolyte from an electrolyte supply component, and, as needed, a pump (e.g., a metering pump) or the like may be further provided to supply the electrolyte from the electrolyte supply component to the dispensing unit 100.

During the electrolyte injection process using the dispensing unit 100, overflow of the electrolyte may occur. For example, as the dispensing unit 100 is operated by automated equipment, a mismatch between the dispensing nozzle 101 and the electrolyte injection port 64 may cause a portion of the electrolyte to leak to the outside of the battery cell 1, or splashing of the electrolyte may occur due to high pressure applied thereto during the dispensing process. The foregoing may cause contamination on the surface of the battery cell 1 and, due to the characteristics of organic substances, may cause corrosion in surrounding components formed of plastic materials such as polycarbonate (PC), thereby causing a problem in that product reliability and stability may be degraded.

The suction unit 200 may perform a function of suctioning and discharging electrolyte that has leaked without being introduced into the battery cell 1 through the electrolyte injection port 64 during the electrolyte injection process. The suction unit 200 may include a suction housing 201. The suction housing 201 may define an external shape of the suction unit 200, and may include a suction hole 205 that is formed at one end of the suction housing 201 and is open toward the outside. The suction housing 201 may include a suction pipe accommodated therein, and the suction hole 205 may be formed at one end of the suction pipe and may be open toward the outside. The suction pipe and the suction hole 205 may function as a suction path through which the electrolyte is suctioned.

The suction unit 200 may be positioned adjacent to the electrolyte injection port 64 during the electrolyte injection process. In embodiments, the suction unit 200 may be seated on the battery cell 1 during the electrolyte injection process. The suction hole 205 may be open toward the electrolyte injection port 64 while the suction housing 201 is seated on the battery cell 1. Alternatively, the suction hole 205 may be open toward the dispensing nozzle 101 while the suction housing 201 is seated on the battery cell 1.

The suction unit 200 may be provided to be movable to a predetermined position along a preset path by a known driving unit, and in response to the movement of the suction unit 200, an operation of positioning the suction housing 201 adjacent to or spaced apart from a peripheral portion of the electrolyte injection port 64 may be repeatedly performed. The driving unit may be operated according to preset conditions under the control of a controller. The driving unit of the suction unit 200 may be driven independently of the driving unit of the dispensing unit 100. In embodiments, the suction unit 200 may be driven in conjunction with the dispensing unit 100.

For example, the suction unit 200 may be secured to the dispensing unit 100. In this case, when the dispensing unit 100 is inserted into the electrolyte injection port 64, the suction unit 200 may be positioned around the peripheral portion of the electrolyte injection port 64 to suction leaked electrolyte. In embodiments, the suction housing 201 may be detachably secured to the dispensing nozzle 101 by at least one fixing unit. The foregoing may imply ease of maintenance and management of the suction unit 200. For example, the fixing unit may include a mechanical fastening structure such as a snap-fit, or may include separate members such as screws and adhesive components. However, this may vary.

Referring to FIG. 4, the suction housing 201 may have a partition shape with a predetermined length L, width W, and thickness t (see left portion of FIG. 4). The suction housing 201 may block electrolyte from being scattered in irregular directions due to splashing of the electrolyte.

For example, a plurality of suction housings 201 may be provided. The plurality of suction housings 201 may be radially arranged with respect to an imaginary central point to be spaced apart from each other at a predetermined interval, and a suction hole 205 may be formed in each of the suction housings 201 and may be open toward the central point. In this case, the suction housings 201 may be radially arranged around a peripheral portion of the dispensing nozzle 101. In this case, suction force provided from at least one of the suction housings 201 may differ from that of another one of the suction housings 201.

As another example, the suction housing 201 may have a hollow tubular shape with open opposite ends, and the suction hole 205 may be formed in an inner circumferential surface of the suction housing 201. In this case, the suction housing 201 may be disposed to enclose the dispensing nozzle 101, with the dispensing nozzle 101 inserted into the suction housing 201.

The suction force generating unit 300 may be connected to the suction unit 200 and may provide a suction force to the suction unit 200. When a suction force is transmitted to the inside of the suction pipe in response to operation of the suction force generating unit 300, electrolyte leaked during the electrolyte injection process may be introduced through the suction hole 205 and discharged through a discharge hole. The suction force generating unit 300 may include any one of a vacuum pump and a suction pump, but may include any known unit capable of providing a suction force to the suction unit 200.

The controller may execute at least one instruction. The controller may be electrically connected to at least some of the components of the electrolyte injection apparatus to control overall operations and functions of the apparatus. The controller may be implemented using various circuits capable of performing computation, such as a micro processor unit (MPU), a micro controller unit (MCU), or a field programmable gate array (FPGA), but this may vary.

The controller may control the dispensing unit 100 and the suction unit 200.

For example, the dispensing unit 100 may be inserted into the electrolyte injection port 64 of the battery cell 1 under the control of the controller, and may inject the electrolyte into the battery cell 1. The controller may control the driving unit of the dispensing unit 100 to control the position of the dispensing unit 100. The suction unit 200 may be positioned adjacent to the electrolyte injection port 64 in conjunction with the dispensing unit 100 under the control of the controller, and may suction electrolyte leaked around the peripheral portion of the electrolyte injection port 64. The controller may control the driving unit of the suction unit 200 to control the position of the suction unit 200. As another example, the suction unit 200 (e.g., the suction housing 201 of the suction unit 200) may be secured to the dispensing unit 100, and the position thereof may be controlled together with the dispensing unit 100 under the control of the controller.

The controller may control the suction force generating unit 300. The controller may selectively control the suction force generating unit 300 to determine on/off operation of suction through the suction unit 200. The controller may control the suction force generating unit 300 in conjunction with the electrolyte injection operation performed by the dispensing unit 100. As needed, the dispensing unit 100 and the suction force generating unit 300 may be independently controlled by the controller, and the suction force generating unit 300 may be controlled to operate at a preset cycle or at a preset point in time.

The electrolyte injection apparatus according to embodiments of the present invention may suction and remove electrolyte that is unintentionally leaked to the outside of the battery cell 1 during the process of injecting the electrolyte into the battery cell 1. Accordingly, product reliability and stability of the manufactured battery cell 1 may be improved.

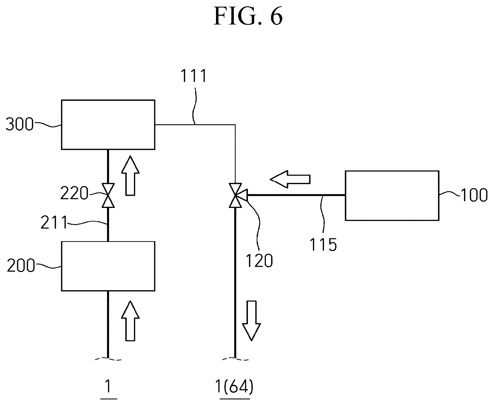

FIGS. 5 and 6 are schematic diagrams illustrating an electrolyte injection apparatus according to embodiments of the present invention. **In** the following description according to embodiments of the present invention, descriptions of components that are substantially the same as those in the above-described embodiments will be omitted.

Referring to FIGS. 5 and 6, the electrolyte injection apparatus according to embodiments of the present invention may inject electrolyte into the battery cell 1 through the dispensing unit 100 after creating a vacuum inside the battery cell 1, and may remove, by suction through the suction unit 200, electrolyte leaked to the outside of the battery cell 1. The suction force generating unit 300 may be a vacuum generating unit.

The vacuum generating unit 300 may include a vacuum pump, and a vacuum pressure may be adjustable and preset. In response to the operation of the vacuum generating unit 300, the interior of the battery cell 1 may be switched between a vacuum state and a vacuum release state. In response to the operation of the vacuum generating unit 300, the suction unit 200 may be switched between a suction state in which a suction operation is performed and a suction release state. As such, an electrolyte injection apparatus according to embodiments of the present invention may share a single one of the vacuum generating unit 300 in order to reduce pressure inside the battery cell 1 and to provide a suction force to the suction unit 200.

The electrolyte injection apparatus according to embodiments of the present invention may include the dispensing unit 100, the suction unit 200, and the vacuum generating unit 300. The dispensing unit 100, the suction unit 200, and the vacuum generating unit 300 may be connected through a line (or piping, duct, etc.), and the line may function as a flow path through which gas or liquid flows. The electrolyte injection apparatus may include switching components 120 and 220 configured to control opening and closing of lines 111, 115, and 211 that connect the components. The switching components 120 and 220 may include a first switching component 120 and a second switching component 220. The switching components 120 and 220 may control switching of a vacuum state and/or flow of the electrolyte.

The electrolyte injection apparatus may include the first switching component 120 configured to selectively connect the vacuum generating unit 300 to the battery cell 1, and the dispensing unit 100 to the battery cell 1. The first switching component 120 may be a component configured to selectively open and close, under the control of the controller and/or manually, a first line 111 that connects the vacuum generating unit 300 to the battery cell 1 (e.g., an electrolyte injection port of the battery cell 1), and a second line 115 that connects the dispensing unit 100 to the battery cell 1. The first switching component 120 may be a three-way valve (or a three-way check valve), but this may vary. The first switching component 120 may be switchable to a first state or a second state. When the first switching component 120 is switched to the first state, the vacuum generating unit 300 and the battery cell 1 may be in communication with each other, and the interior of the battery cell 1 may be depressurized under operation of the vacuum generating unit 300. When the first switching component 120 is switched to the second state, the dispensing unit 100 and the battery cell 1 may be in communication with each other, and electrolyte may be injected into the battery cell 1. The electrolyte may be injected into the battery cell 1 by a pressure difference between the internal pressure of the battery cell 1 and the internal pressure of the dispensing unit 100. In other embodiments, the electrolyte may be injected into the battery cell 1 by a pressurizing unit such as a pump.

The electrolyte injection apparatus may further include the second switching component 220 configured to selectively connect the vacuum generating unit 300 to the suction unit 200. The second switching component 220 may be a component configured to open and close a third line 211, which connects the vacuum generating unit 300 to the suction unit 200, under the control of the controller and/or manually. The second switching component 220 may be a vacuum valve (or a vacuum check valve), but this may vary. The suction unit 200 may selectively provide a suction force in response to an on/off operation of the second switching component 220.

Hereinafter, a method of selectively operating the electrolyte injection apparatus will be described.

### <Depressurization of the interior of the battery cell, FIG. 5>

The first switching component 120 may be switched to the first state to connect the vacuum generating unit 300 to the battery cell 1 (while the dispensing unit 100 is disconnected from the battery cell 1), and the vacuum generating unit 300 may be operated to depressurize the interior of the battery cell 1.

### <Electrolyte injection and suction of leaked electrolyte, FIG. 6>

The first switching component 120 may be switched to the second state to connect the dispensing unit 100 to the battery cell 1 (while the vacuum generating unit 300 is disconnected from the battery cell 1), and the second switching component 220 may be switched to connect the vacuum generating unit 300 to the suction unit 200. As a result, electrolyte may be injected into the battery cell 1 through the dispensing unit 100, and leaked electrolyte may be suctioned through the suction unit 200.

During the foregoing process, the switching operation of the first switching component 120 to the second state and the switching operation of the second switching component 220 may be interlocked with each other. That is, the switching operation of the first switching component 120 to the second state may be interlocked with the switching operation (on-state) of the second switching component 220, which provides a suction force to the suction unit 200.

Even after completion of the electrolyte injection through the dispensing unit 100, the suction process may be continued for a predetermined period of time in order to suction any electrolyte that may still leak. To this end, the controller may maintain an on-state of the second switching component 220 for the predetermined period of time even after the first switching component 120 is switched to an off-state. The off-state of the first switching component 120 may refer to a state in which both the first line 111 connecting the vacuum generating unit 300 to the battery cell 1 and the second line 115 connecting the dispensing unit 100 to the battery cell 1 are closed. The on-state of the second switching component 220 may refer to a state in which the third line 211 connecting the vacuum generating unit 300 to the suction unit 200 is open to provide a suction force to the suction unit 200.

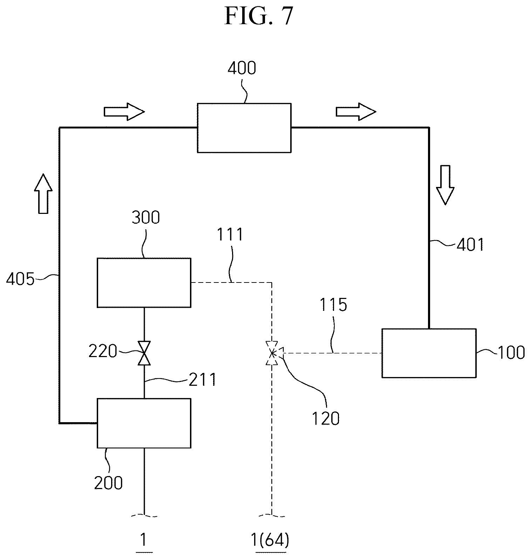

FIG. 7 is a schematic diagram illustrating an electrolyte injection apparatus according to embodiments of the present invention. In the following description according to embodiments of the present invention, descriptions of components that are the same as those in the above-described embodiments will be omitted. As illustrated, the components described in embodiments of the present invention below may be implemented in combination with the components described in other embodiments of the present invention.

Referring to FIG. 7, an electrolyte injection apparatus according to embodiments of the present invention may include an electrolyte supply component 400 configured to supply electrolyte to the dispensing unit 100. The electrolyte supply component 400 may include a reservoir in which electrolyte is stored. The electrolyte supply component 400 and the dispensing unit 100 may be connected through an inlet line 401, and the inlet line 401 may function as a flow path through which the electrolyte flows. As needed, a pump may be provided on the inlet line 401 connecting the electrolyte supply component 400 and the dispensing unit 100 to control the flow of the electrolyte. The pump may be a liquid discharge pump capable of supplying a metered amount of electrolyte, but this may vary.

The electrolyte supply component 400 and the suction unit 200 may be connected through a discharge line 405. The discharge line 405 may function as a flow path through which the electrolyte flows. The leaked electrolyte suctioned through the suction unit 200 may be reintroduced into the electrolyte supply component 400 through the discharge line 405. In order to control the flow of the electrolyte, a pump may be provided on the discharge line 405 connecting the electrolyte supply component 400 and the suction unit 200.

As needed, the electrolyte injection apparatus may further include an auxiliary switching component provided on the discharge line 405. The auxiliary switching component may selectively open and close the discharge line 405. Whether the leaked electrolyte is recovered may be determined in response to an on/off operation of the auxiliary switching component. During the reintroduction of the leaked electrolyte, the second switching component 220 may be switched to an off-state. For example, the auxiliary switching component may be switched to an on-state in conjunction with the switching operation of the second switching component 220 to the off-state. Here, the second switching component 220 may be referred to as a suction switching component.

During an electrolyte injection process, an overflow of the electrolyte to the outside of the case may occur. For example, a portion of the electrolyte may leak to the outside of the case due to a mismatch between an electrolyte dispensing unit and an electrolyte injection port, or splashing of the electrolyte to the outside of the case may occur due to high pressure applied to the electrolyte during an electrolyte dispensing process. The overflowed electrolyte may contaminate a surface of the case and, due to the characteristics of organic substances, may cause corrosion in surrounding components made of plastic materials such as polycarbonate (PC), thereby causing a problem in that product reliability and stability may be degraded.

The electrolyte injection apparatus according to embodiments of the present invention may suction leaked electrolyte that has not been injected into the battery cell 1, and may recover the leaked electrolyte to the electrolyte supply component 400 rather than discarding the leaked electrolyte, thereby allowing the leaked electrolyte to be reused. Accordingly, product reliability and stability of the manufactured battery cell may be improved.

Although the present invention has been described above in connection with the limited embodiments and drawings, the present invention is not limited to the embodiments. A person having ordinary skill in the art to which the present invention pertains may modify and change the present invention within the technical spirit of the present invention and the equivalent range of the following claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An electrolyte injection apparatus for secondary batteries, the electrolyte injection apparatus being configured to inject electrolyte into an electrolyte injection port (64) on at least one surface of a battery cell (1), the electrolyte injection apparatus comprising:
a dispensing unit (100) including a dispensing nozzle (101) configured to inject the electrolyte into the electrolyte injection port (64);
a suction unit (200) positioned in a peripheral portion of the dispensing nozzle (101), the suction unit (200) being configured to provide a predetermined suction force; and
a suction force generating unit (300) connected to the suction unit (200), the suction force generating unit (300) being configured to generate the suction force.

2. The electrolyte injection apparatus according to claim 1, wherein the suction unit (200) comprises a suction housing (201) including a suction hole (205) open toward the dispensing nozzle (101), optionally wherein the suction housing (201) is detachably secured to the dispensing nozzle (101).

3. The electrolyte injection apparatus according to claim 2, wherein:
the suction housing (201) has a preset partition shape, the suction housing (201) being around the electrolyte injection port (64) during injection of the electrolyte, and
the suction hole (205) is open toward the electrolyte injection port (64) during the injection of the electrolyte, optionally wherein the suction housing (201) is seated on the at least one surface of the battery cell (1) on which is the electrolyte injection port (64), during the injection of the electrolyte.

4. The electrolyte injection apparatus according to claim 3, wherein:
the suction housing (201) comprises a plurality of suction housings (201),
the plurality of suction housings (201) are radially spaced apart from each other with respect to an imaginary central point, and
the suction hole (205) is open toward the imaginary central point.

5. The electrolyte injection apparatus according to claim 4, wherein the plurality of suction housings (201) are radial with respect to the dispensing nozzle (101), during the injection of the electrolyte, optionally wherein at least one of the plurality of suction housings (201) provides a suction force different from a suction force provided by another one of the plurality of suction housings (201).

6. The electrolyte injection apparatus according to any of claims 3 to 5, wherein:
the suction housing (201) has a hollow tubular shape with open opposite ends, and
the suction hole (205) is in an inner circumferential surface of the suction housing (201), optionally wherein the suction housing (201) encloses the dispensing nozzle (101), with the dispensing nozzle (101) inserted into the suction housing (201), during the injection of the electrolyte.

7. The electrolyte injection apparatus according to any one of the preceding claims, wherein the suction force generating unit (300) comprises a vacuum pump.

8. The electrolyte injection apparatus according to any one of the preceding claims, wherein:
the suction force generating unit (300) comprises a vacuum generating unit (300), and
the vacuum generating unit (300) is connected to the battery cell (1) and configured to depressurize an interior of the battery cell (1), or is connected to the suction unit (200) to provide a suction force.

9. The electrolyte injection apparatus according to claim 8, further comprising:
a first switching component (120) configured to selectively open or close a first line (111) connecting the vacuum generating unit (300) and the battery cell (1) and a second line (115) connecting the dispensing unit (100) and the battery cell (1),
wherein the first switching component (120) is switched to a first state in which the vacuum generating unit (300) is in communication with the battery cell (1) to depressurize the interior of the battery cell (1), or to a second state in which the dispensing unit (300) is in communication with the battery cell (1) to inject the electrolyte into the battery cell (1).

10. The electrolyte injection apparatus according to claim 9, further comprising:
a second switching component (220) configured to selectively open or close a third line (211) connecting the vacuum generating unit (300) and the suction unit (200),
wherein the suction unit (200) selectively provides a suction force in response to a switching operation of the second switching component (220).

11. The electrolyte injection apparatus according to claim 10, wherein a switching operation of the first switching component (120) to the second state is interlocked with a switching operation of the second switching component (220) configured to provide a suction force to the suction unit (200).

12. The electrolyte injection apparatus according to claim 10 or 11, wherein the second switching component (220) maintains an on-state in which the suction force is provided to the suction unit (200) for a preset period of time, after the first switching component (120) is switched to an off-state.

13. The electrolyte injection apparatus according to any one of the preceding claims, further comprising:
an electrolyte supply component (400) configured to supply the electrolyte to the dispensing unit (100); and
a discharge line (405) connecting the electrolyte supply component (400) and the suction unit (200), the discharge line (405) being configured to recover the electrolyte suctioned through the suction unit (200) to the electrolyte supply component (400), optionally wherein further comprising a pump on the discharge line (405), the pump being configured to control a flow of the electrolyte.

14. The electrolyte injection apparatus according to claim 13, further comprising an auxiliary switching component configured to selectively open or close the discharge line (405).

15. The electrolyte injection apparatus according to claim 14, further comprising:
a suction switching component (220) configured to selectively open or close a line connecting the suction force generating unit (300) and the suction unit (200),
wherein the auxiliary switching component is switched to an on-state in conjunction with switching of the suction switching component (220) to an off-state.
